# DEMANDE DE BREVET EUROPEEN

(11) **EP 3 042 702 A1**
(43) Date de publication de la demande: **13.07.2016**
(21) Numéro de dépôt: 15200312.5
(22) Date de dépôt: 16.12.2015
(51) Int. Cl.: A63H 29/22, A63H 33/00, A63H 11/06

(54) **ROBOT ROULANT ET SAUTEUR À CAPACITÉ ACCRUE DE FRANCHISSEMENT D'OBSTACLES**

(30) Priorité: 29.12.2014 FR 1463364
(71) Demandeur: Parrot, 75010 Paris (FR)
(72) Inventeur: BARSE, Thomas, Nagoya, Aichi 461-0001 (JP)
(74) Mandataire: Dupuis-Latour, Dominique

(57) **Abrégé**

Ce robot comporte un corps avec un affut (12) et une paire de roues (14), ainsi qu'une pièce coulissante (16) supportant un patin de contact (36) permettant, par libération brusque de l'énergie stockée dans un ressort, de provoquer un bondissement du robot au-dessus du sol. Il comporte en outre une béquille de queue (50) et solidarisée au corps du robot en un point de fixation situé à distance de la pièce coulissante et dans une région (24) à l'opposé du sol par rapport à la direction principale (Δ) de l'affut. La béquille de queue forme à son extrémité distale (56) un point d'appui alternatif (A₃) au sol, dans une région située au-delà de la circonférence des roues (14). La béquille de queue est au moins en partie élastiquement déformable en flexion de manière à permettre sous contrainte un rapprochement ou un éloignement de son extrémité distale (56) par rapport au point de fixation (58) au corps du robot.

## Description

L'invention concerne un robot roulant et sauteur comportant une paire de roues disposées de part et d'autre d'un corps du robot.

Un tel type de robot est par exemple décrit dans le JP 2011/41696 A (Barse) ainsi que dans le EP 2 862 606 A1 (publié le 22.04.2015), correspondant au produit commercialisé sous la dénomination *"Jumping Sumo"* par Parrot SA, Paris, France.

Il s'agit d'un objet télécommandé roulant et sautant monté sur deux roues indépendantes mues chacune par un moteur qui leur est propre, ce qui permet au robot d'avancer, de reculer, de se mettre en position pour sauter, etc. Le corps du robot comporte un châssis ou affut relié aux roues et une pièce coulissante guidée sur des glissières, avec un ressort interposé entre l'affut et la pièce coulissante. Un moteur déplace la pièce coulissante en rapprochement de l'affut, ce qui a pour effet de comprimer progressivement le ressort et d'y accumuler ainsi de l'énergie potentielle élastique. L'ensemble est maintenu dans cette position par un système de verrouillage, qui peut être libéré pour relâcher brusquement le ressort et projeter le robot au-dessus du sol par transformation de l'énergie potentielle du ressort en énergie cinétique, la percussion de l'élément coulissant contre le sol produisant, par réaction, l'effet de bondissement recherché. La hauteur du saut peut être ajustée par une compression variable du ressort, afin de délivrer une énergie plus ou moins importante au moment du saut.

Le but de la présente invention est, en conservant cette structure de base et cette fonction de saut, de perfectionner le robot pour lui ajouter des fonctionnalités d'aide au franchissement d'obstacles, notamment lorsqu'il est utilisé en "tout-terrain", ou pour franchir par exemple des marches, des bordures de trottoir, etc., et ceci avec un minimum de moyens matériels complémentaires ajoutés à la structure de base.

L'invention s'applique à un robot du type précité, c'est-à-dire comprenant plus précisément et de manière en elle-même connue notamment d'après le J P 2011/41696 A précité:
- un corps comprenant un affut et une paire de roues disposées de part et d'autre de l'affut, les roues étant montées à rotation par rapport à l'affut autour d'un axe commun perpendiculaire à la direction principale de l'affut ;
- une pièce coulissante, mobile en translation guidée le long de l'affut entre deux positions extrêmes, respectivement déployée et resserrée, cette pièce coulissante ;
- des moyens libérables de verrouillage de la pièce coulissante en position resserrée ;
- des premiers moyens moteurs, aptes à entrainer en rotation les roues par rapport à l'affut ;
- des seconds moyens moteurs, aptes à déplacer en translation la pièce coulissante par rapport à l'affut jusqu'à la position resserrée ;
- un organe ressort sollicité entre l'affut et la pièce coulissante ; et
- des moyens de commande de l'organe ressort, aptes à i) stocker progressivement de l'énergie mécanique dans l'organe ressort par déplacement de la pièce coulissante vers la position resserrée sous l'action des seconds moyens moteurs, et ii) libérer l'énergie ainsi stockée en entrainant la pièce coulissante vers la position déployée suite à la libération des moyens de verrouillage, de manière à provoquer un bondissement du robot au-dessus du sol sous l'effet de la détente de la pièce coulissante.

La pièce coulissante comporte une extrémité distale saillante supportant un patin de contact tel qu'en position resserrée le patin de contact se situe à proximité du périmètre des roues, et que la détente de la pièce coulissante soit transmise par le patin de contact. De façon caractéristique, le robot comporte en outre une béquille de queue s'étendant dans un plan vertical et solidarisée au corps du robot en un point de fixation situé à distance de la pièce coulissante et dans une région à l'opposé du sol par rapport à la direction principale de l'affut. La béquille de queue forme à son extrémité distale un point d'appui alternatif au sol, dans une région située au-delà de la circonférence des roues. De plus, cette béquille de queue est au moins en partie élastiquement déformable en flexion de manière à permettre sous contrainte un rapprochement ou un éloignement du patin de contact par rapport à la surface de contact au sol.

Les roues sont avantageusement des roues crantées à leur périphérie. Dans une forme de réalisation préférentielle, le robot comprend en outre des moyens de contrôle de saut, aptes à modifier la configuration du robot successivement entre :
a) ladite position déployée, où le robot repose en équilibre stable sur les deux roues et le patin de contact ;
b) ladite position resserrée, où le robot repose en équilibre stable sur les deux roues et le point d'appui alternatif à l'extrémité distale de la béquille de queue, cette béquille de queue n'étant pas sous contrainte de flexion ;
c) une position de préparation de saut, où, après sollicitation des premiers moyens moteurs dans le sens d'un basculement de l'affut vers l'arrière, le patin vient en contact avec le sol, la béquille de queue étant alors sous contrainte de flexion ; et
d) une position de saut, où le robot décolle du sol après libération des moyens de verrouillage.

Selon diverses caractéristiques subsidiaires avantageuses :
- le point d'appui alternatif est configuré par rapport à la béquille de queue de manière que le passage de la position déployée à la position resserrée se fasse sans changement d'inclinaison de la direction principale de l'affut par rapport au sol ;
- le point de fixation de la béquille de queue au corps du robot est situé, en direction radiale, au voisinage intérieur de la périphérie des roues ;
- la longueur de la béquille de queue est comprise entre 1 et 3 fois le diamètre des roues ;
- la béquille de queue comprend une partie distale rigide allongée reliée au corps du robot par un organe élastiquement déformable ;
- la partie distale rigide est une partie courbée tournant sa concavité vers le sol ;
- la face de contact du patin tournée vers le sol est une face arrondie convexe ;
- l'extrémité distale de la béquille de queue comprend en outre des moyens de montage d'un accessoire procurant une fonctionnalité supplémentaire au robot, et/ou la partie rigide de la béquille est amovible et remplaçable par un accessoire procurant une fonctionnalité supplémentaire au robot.

On va maintenant décrire un exemple de mise en oeuvre de l'invention, en référence aux dessins annexés où les mêmes références numériques désignent d'une figure à l'autre des éléments identiques ou fonctionnellement semblables.
La Figure 1 est une vue générale de trois-quarts avant d'un robot connu.
La Figure 2 est une vue générale de trois-quarts arrière du robot de la Figure 1, montrant plus précisément les différents éléments de ce robot connu qui, combinés ensemble, assurent la fonction de saut.
Les Figures 3(a) et (b) sont des vues de côté illustrant le robot connu des

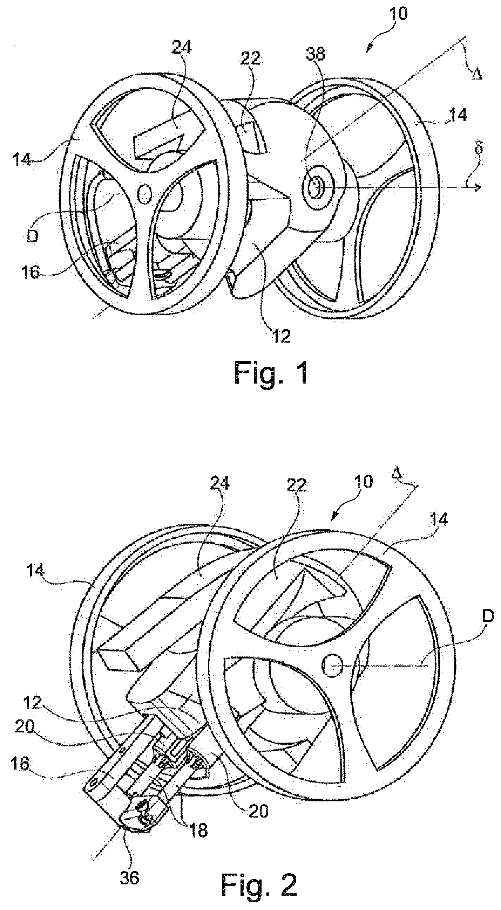

Figures 1 et 2, avec la pièce coulissante respectivement en position déployée et en position resserrée.

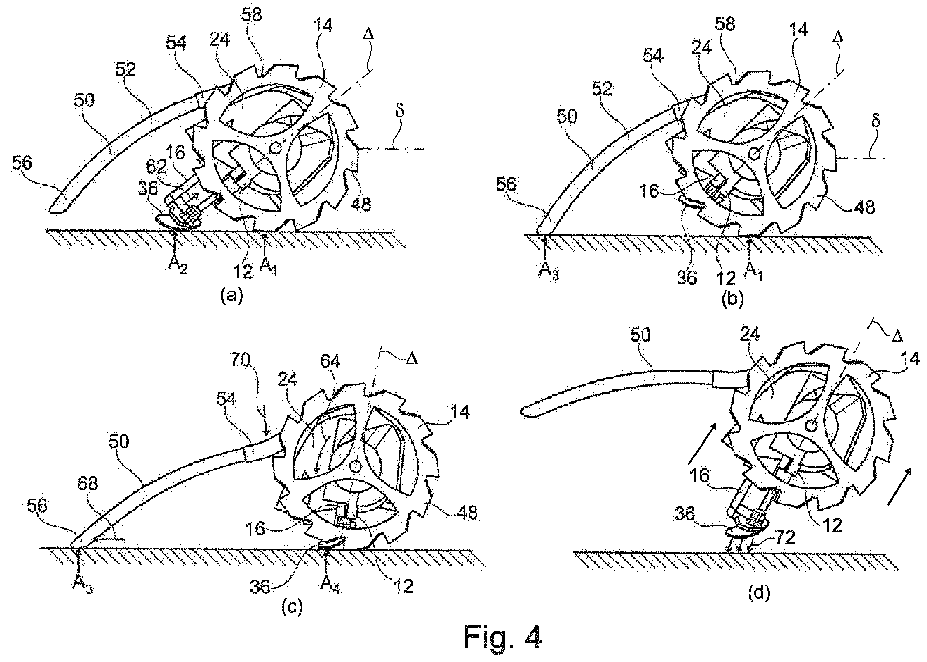

Les Figures 4(a) à (c) illustrent un robot du type illustré sur les figures précédentes mais modifié selon les enseignements de l'invention, tel qu'il se présente selon quatre positions successives, à savoir : déployée, resserrée, de préparation d'un saut et de déclenchement du saut.

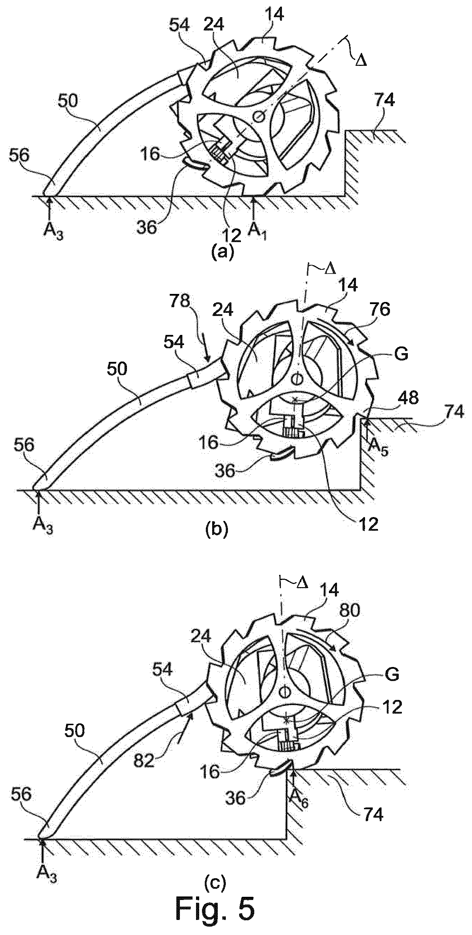

Les Figures 5(a) à (c) illustrent le robot selon l'invention de la Figure 4, tel qu'il se présente à trois étapes successives du franchissement d'un obstacle tel qu'une marche.

Les Figures 1, 2 et 3 illustrent un robot de type connu, tel que celui décrit dans le EP 2 862 606 A1 précité.

Sur ces figures, la référence 10 désigne de façon générale le robot, qui comprend un affut 12 supporté par deux roues 14. Les roues 14 sont montées sur l'affut 12 à pivotement autour d'un axe commun D, et elles sont entrainées indépendamment par des moteurs électriques propres (non représentés), pilotés par des circuits appropriés permettant au robot, selon le sens et la vitesse de rotation des roues, de progresser en ligne droite, de reculer, de tourner sur lui-même ou en faisant un virage, etc., ces différentes évolutions étant commandées par l'utilisateur au moyen d'une télécommande appropriée.

L'affut 12 s'étend suivant une direction principale Δ, perpendiculaire à l'axe D de pivotement des roues et supporte une pièce coulissante 16 déplaçable en translation parallèlement à l'axe Δ sous l'effet d'un moteur approprié, piloté par les circuits de contrôle du robot. Cette pièce coulissante 16 comprend par exemple deux tiges parallèles 18 guidées par ces cylindres respectifs 20 solidaires de l'affut 12, avec interposition entre les tiges 18 et les cylindres 20 d'un ou plusieurs ressorts hélicoïdaux (non visibles sur les figures) servant de moyens de stockage d'énergie, avec compression du ressort lorsque la pièce coulissante 16 est déplacée en rapprochement de l'affut 12, et inversement restitution à la pièce coulissante 16 de l'énergie stockée par ces ressorts lorsque la pièce coulissante 16 est libérée vers une position déployée de l'ensemble affut/pièce coulissante. Ce mécanisme est notamment décrit dans le EP 2 952 236 A1 (publié le 09.12.2015).

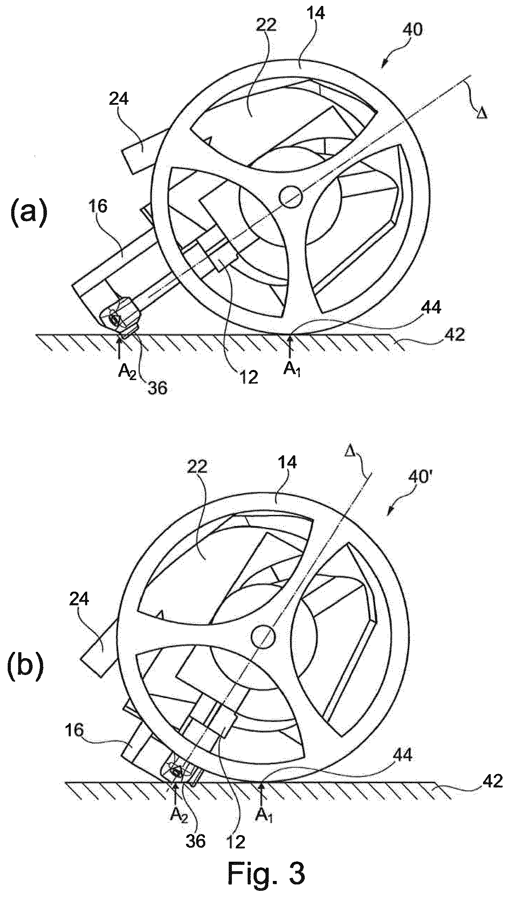

On notera que, dans la position complètement déployée de la pièce coulissante 16 (position illustrée sur les Figures 1, 2 et 3(a)), l'extrémité distale de cette pièce fait saillie au-delà de la circonférence des roues 14, et peut donc venir en contact avec le sol. Cette extrémité distale comprend à cet effet un élément rapporté ou une surface formant patin de contact 36, susceptible de former un point d'appui au sol pour le robot (point référencé A₂ sur les Figures 3(a) et (b)).

Le robot peut être également pourvu d'un ou plusieurs dispositifs optiques 38 (Figure 1) tels qu'une caméra ou un éclairage, dont l'axe optique δ forme un angle fixe par rapport à la direction principale Δ de l'affut et du corps du robot solidaire de cet affut. Ce dispositif permet par exemple, lorsque le robot se déplace en roulant, d'éclairer l'avant du robot et/ou de capter une image vidéo du terrain de manoeuvre, vu depuis le robot.

Les Figures 3(a) et (b) illustrent le robot dans deux positions ci-après dénommées "déployée" 40 et "resserrée" 40' correspondant aux deux positions extrêmes de la pièce coulissante 16 dans son déplacement guidé en translation par rapport à l'affut 12.

Dans l'une et l'autre de ces positions 40 et 40', le robot repose sur le sol 42 par trois points d'appui : en 44, au contact des roues (point A₁) avec le sol, et par le patin de contact 36 à l'extrémité distale de la pièce coulissante 16 (point A₂).

Comme on l'a indiqué plus haut, la pièce coulissante 16 forme un ensemble télescopique avec l'affut 12, et elle peut donc se déplacer en translation entre la position déployée 40 (Figure 3(a)) et la position resserrée 40' (Figure 3(b)) sous l'action d'un moteur piloté spécifiquement pour assurer cette translation.

La position déployée de la Figure 3(a) permet notamment le roulage au sol, les rotations, etc.

Le déplacement de la pièce coulissante 16 vers la position resserrée produit un déplacement du point d'appui au sol A₂ par le patin 36 et, corrélativement, une modification de l'inclinaison de l'axe Δ de l'affut, et donc de l'inclinaison du robot.

La position resserrée de la Figure 3(b) constitue la position préparatoire au saut, qui surviendra par libération brusque de l'énergie des ressorts préalablement comprimés, cette énergie étant transmise via le patin 36, par inertie et réaction du sol, au corps 22 du robot pour provoquer le bondissement de celui-ci.

### Structure générale du robot selon l'invention

Les Figures 4 et 5 illustrent un robot tel que celui que l'on vient de décrire en référence à l'état de la technique, après avoir été modifié selon les enseignements de l'invention.

La Figure 4 expliquera comment est conservée la fonction (préexistante) de saut que l'on a exposée plus haut, tandis que la Figure 5 illustrera la fonction (nouvelle) de franchissement d'obstacles.

Pour permettre cette nouvelle fonction, le robot est pourvu de roues 14 qui sont des roues crantées, c'est-à-dire pourvues à leur périphérie, sur la bande de roulement, de reliefs, crans ou crampons 48 ou autre moyen analogue (crampons rapportés ou monoblocs avec la roue, sculptures profondes, etc.) procurant une adhérence élevée sur des sols irréguliers, par exemple comme illustré sur les Figures 5 (b) et (c) sur le rebord d'une marche, ou bien sur des terrains naturels, caillouteux, avec des branchages, etc. en minimisant le risque de dérapage du robot. Une alternative à des roues crantées consiste, de manière équivalente, à réaliser ces roues en un matériau très mou, pouvant épouser par sa déformation les irrégularités du sol sur lequel évolue le robot.

De façon caractéristique de l'invention, le robot est pourvu d'une béquille de queue 50 solidarisée au corps du robot. Dans l'exemple illustré, cette béquille 50 est formée d'un élément rigide allongé 52 relié au corps du robot par un organe élastiquement déformable 54 tel qu'un ressort hélicoïdal ou un manchon élastique.

L'extrémité distale 56 de la béquille de queue 50 est destinée à former un point d'appui alternatif pour le corps du robot. Les dimensions et la forme de la béquille de queue sont choisies pour que cette extrémité 56 se situe au-delà de la périphérie des roues, par exemple à une distance de l'axe de rotation comprise entre typiquement 1 et 3 fois le diamètre des roues. Côté proximal, la béquille de queue 50 est solidarisée au corps (par l'élément élastique 54 dans l'exemple illustré) en un point de fixation 58 situé en direction radiale à distance de la pièce coulissante 16 et dans une région du corps du robot située à l'opposé du sol par rapport à la direction principale Δ de l'affut, en particulier sur l'excroissance saillante 24 en partie supérieure du corps du robot, au voisinage intérieur de la périphérie des roues.

La béquille de queue 50, qui s'étend dans un plan vertical, est une béquille flexible du fait de l'organe élastique 54 qui relie l'élément rigide allongé au point de fixation 58 au corps du robot. Plus précisément, cette flexibilité doit autoriser une déformation en flexion permettant, sous contrainte, un éloignement ou un rapprochement du patin de contact (36) par rapport à la surface de contact au sol.

La configuration générale de la béquille de queue et ses dimensions sont telles que, lorsque la pièce coulissante est en position déployée (configuration de la Figure 4(a), correspondant elle-même à la configuration de la Figure 3(a)), les seuls points d'appui qui maintiennent le robot et soutiennent son poids dans ce cas restent la pièce coulissante (en A2) et les roues (en A1). Il peut éventuellement subsister, comme dans l'exemple de la figure, un intervalle entre la surface du sol et l'extrémité distale 56 de la béquille de queue 50, mais en tout état de cause même si cette extrémité 56 touche le sol elle ne forme pas un vrai point d'appui lorsque la pièce coulissante est déployée, du fait de la souplesse de la béquille 50.

En revanche, en position resserrée de la pièce coulissante 16 (configuration des Figures 4(b) et 5(a), correspondant à la configuration de la Figure 3(b)) l'extrémité distale 56 vient en contact avec le sol, le robot reposant alors sur ses deux roues (points A₁) et sur l'extrémité 56 de la béquille de queue (point A₃), au lieu de reposer sur ses deux roues (points A₁) et le patin 36 (point A₂). On comparera à cet égard les Figures 4(b) et 3(b)).

Avantageusement, les dimensions et la forme de la béquille de queue sont choisies de manière que ce changement de point d'appui lors du passage à la position resserrée de la pièce coulissante se fasse sans modification de l'orientation générale de l'axe Δ de l'affut, et donc de l'axe δ de la caméra du robot par rapport au sol (ou avec une faible modification, du fait du poids du robot et de la partie souple, entrainant une légère flexion de la béquille). Ceci évitera un basculement de l'image de la scène captée par cette caméra, comme c'était le cas avec le robot connu illustré Figure 3, où le passage de la position de la Figure 3(a) à celle de la Figure 3(b) se faisait avec basculement vers le haut de l'axe Δ, et donc de la direction de visée δ de la caméra. La béquille de queue 50 présente avantageusement une forme courbée, tournant sa concavité vers le sol, ce qui permet avec une béquille plus courte de mieux contrôler le positionnement du corps du robot.

Comme on l'a indiqué, la fonction de l'extrémité 56 de la béquille de queue est, principalement, de constituer un point d'appui alternatif pour le robot dans des conditions que l'on exposera plus bas. Mais cette extrémité peut également servir, de façon subsidiaire, à la fixation d'un accessoire procurant une fonctionnalité supplémentaire au robot, par exemple par montage d'un flotteur, d'un balai, d'une catapulte, de piquants, etc. soit en montant directement l'accessoire sur la béquille de queue, soit en remplaçant tout ou partie de la partie rigide 52 de la béquille par un élément de remplacement portant l'accessoire en question.

### Cinématique de la fonction de saut

Comme on va le voir en référence aux Les Figures 4(a) à (d), la fonction de saut du dispositif connu (exposée plus haut en référence à la Figure 3) est conservée avec la structure selon l'invention, où le robot est muni de la béquille de queue 50.

À la première étape, illustrée Figure 4(a), la pièce coulissante 16 est en position déployée, et le robot repose sur ses deux roues (point A₁) et sur le patin 36 (point A₂). L'extrémité 56 de la béquille de queue 50 est à distance du sol. Cette configuration n'est pas différente de celle illustrée Figure 3a pour un dispositif selon l'état de la technique.

Après rétraction de la pièce coulissante 16 (flèche 62), la configuration est celle illustrée Figure 4(b). La pièce coulissante 16 est alors en position resserrée, avec compression des ressorts, comme dans la configuration de la Figure 3(b) exposée plus haut. Toutefois, à la différence de la Figure 3(b), du fait de la présence de la béquille de queue 50 le troisième point d'appui devient l'extrémité 56 de la béquille (point d'appui alternatif A₃) le patin 36 se situant alors au-dessus du niveau du sol. On notera par ailleurs que dans cette position de la Figure 4(b) la béquille flexible 50 n'est pas, ou pratiquement pas, sous contrainte de flexion.

Cette position resserrée peut être conservée en attente d'un saut ultérieur, le robot pouvant continuer à évoluer au sol avec une stabilité accrue notamment en terrain accidenté grâce aux crampons 48 des roues 14 mais, surtout, du plus grand éloignement entre les points de contact A₁ des roues et le troisième point d'appui, à savoir le point d'appui alternatif A₃, qui définit un triangle de sustentation plus étendu que dans le cas précédent.

Lorsque l'utilisateur souhaite déclencher le saut, le circuit de contrôle des moteurs d'entrainement des roues envoie à ceux-ci une impulsion d'accélération qui provoque un basculement vers l'arrière du corps du robot (flèche 64, Figure 3(c)) avec pour conséquence le recul du point d'appui alternatif A₃ (flèche 68) et le fléchissement (schématisé par la flèche 70) de l'élément élastique 54 de la béquille de queue. L'impulsion d'accélération imprimée au robot et la mise en flexion de la béquille de queue 50 a pour effet de plaquer le patin 36 vers le sol. Lorsque le patin 36 touche le sol (point A₄), alors le circuit de contrôle libère les moyens de verrouillage de la pièce coulissante, ce qui a pour effet de provoquer la détente brusque de cette pièce coulissante et le bondissement du robot au-dessus du sol, par le patin 36 (flèches 72, Figure 4(d)).

En pratique, la libération des moyens de verrouillage est provoquée au moment approprié par ajustement entre l'instant de cette libération (déverrouillage) et la durée de l'impulsion d'accélération des roues. Ceci assure un saut dans les meilleures conditions, avec transmission directe et immédiate de l'énergie libérée au moment du déverrouillage.

### Cinématique de la fonction de franchissement d'obstacles

On va maintenant décrire, en référence aux Figures 5(a) à (c), comment l'adjonction de la béquille de queue 50 procure une fonction nouvelle de franchissement des obstacles.

L'obstacle est dans cet exemple une marche 74 devant laquelle se présente le robot, dans la configuration illustrée Figure 5(a).

Cette configuration est en tous points identique à celle de la Figure 4(b) décrite plus haut, c'est-à-dire avec le robot reposant au sol sur ses deux roues (points d'appui A₁) et l'extrémité 56 de la béquille de queue 50 (point d'appui alternatif A₃). La pièce coulissante 16 est en position resserrée (et elle y restera pendant tout le franchissement de l'obstacle), c'est-à-dire que le patin 36 se trouve au voisinage intérieur de la périphérie des roues 14.

À l'étape suivante, illustrée Figure 5(b), les roues 14 du robot ont avancé (flèche 76) et elles entrent en contact avec l'obstacle 74 et grâce aux crampons 48 viennent accrocher une partie saillante de cet obstacle, par exemple le nez de la marche 74. Le robot est alors en appui sur les points de contact A₅ des roues avec l'obstacle, et le point d'appui alternatif A₃ qui est toujours en contact avec le sol.

Sous l'effet du poids du robot, dont le centre de gravité G se situe entre les points A₅ et A₃, la béquille de queue 50 est mise sous contrainte élastique, avec flexion de l'élément élastique déformable 54 (flexion schématisée par la flèche 78).

À l'étape suivante, illustrée Figure 5(c), la rotation des roues est poursuivie (flèche 80). Le robot et ses roues franchissent l'obstacle, tandis que le point d'appui alternatif A₃, toujours en contact avec le sol, empêche le basculement vers l'arrière du robot. La contrainte exercée par la béquille de queue, qui est sous contrainte de flexion (schématisée par la flèche 82), a par ailleurs tendance à pousser le robot vers l'avant de l'obstacle.

Une fois que le centre de gravité G du robot a passé l'obstacle, c'est-à-dire dans l'exemple illustré lorsque le patin 36 arrive au niveau du nez de la marche 74 (point d'appui A₆), alors le robot peut poursuivre son chemin, la béquille de queue 50 assurant la stabilité de l'ensemble mobile lors de cette phase transitoire. La face de contact du patin 36 tournée vers le sol est de préférence une face arrondie, convexe, pour ne pas accrocher l'obstacle et permettre de passer celui-ci sans inconvénient.

On notera que cette fonctionnalité de franchissement d'obstacle ne nécessite aucun élan à donner au robot, la configuration illustrée Figure 5(a) pouvant être une configuration où le robot est à l'arrêt, simplement face à l'obstacle.

## Revendications

1. Un robot roulant et sauteur reposant sur le sol, comportant :
- un corps (22) comprenant un affut (12) et une paire de roues (14) disposées de part et d'autre de l'affut, les roues étant montées à rotation par rapport à l'affut autour d'un axe commun (D) perpendiculaire à la direction principale (Δ) de l'affut ;
- une pièce coulissante (16), mobile en translation guidée le long de l'affut entre deux positions extrêmes, respectivement déployée et resserrée ;
- des moyens libérables de verrouillage de la pièce coulissante en position resserrée ;
- des premiers moyens moteurs, aptes à entrainer en rotation les roues par rapport à l'affut ;
- des seconds moyens moteurs, aptes à déplacer en translation la pièce coulissante par rapport à l'affut jusqu'à la position resserrée ;
- un organe ressort sollicité entre l'affut et la pièce coulissante ; et
- des moyens de commande de l'organe ressort, aptes à i) stocker progressivement de l'énergie mécanique dans l'organe ressort par déplacement de la pièce coulissante vers la position resserrée sous l'action des seconds moyens moteurs, et ii) libérer l'énergie ainsi stockée en entrainant la pièce coulissante vers la position déployée suite à la libération des moyens de verrouillage, de manière à provoquer un bondissement du robot au-dessus du sol sous l'effet de la détente de la pièce coulissante,
ce robot étant **caractérisé en ce que** :
- la pièce coulissante (16) comporte une extrémité distale saillante supportant un patin de contact (36) ;
- en position resserrée le patin de contact se situe à proximité du périmètre des roues ;
- la détente de la pièce coulissante est transmise par le patin de contact (36) ;
- le robot comporte en outre une béquille de queue (50) s'étendant dans un plan vertical et solidarisée au corps (22) du robot en un point de fixation (58) situé à distance de la pièce coulissante et dans une région (24) à l'opposé du sol par rapport à la direction principale (Δ) de l'affut ;
- la béquille de queue forme à son extrémité distale (56) un point d'appui alternatif (A₃) au sol, dans une région située au-delà de la circonférence des roues (14) ; et
- la béquille de queue est au moins en partie élastiquement déformable en flexion de manière à permettre sous contrainte un rapprochement ou un éloignement du patin de contact (36) par rapport à la surface de contact au sol.

2. Le robot de la revendication 1, dans lequel les roues (14) sont des roues crantées (48) à leur périphérie.

3. Le robot de la revendication 1, comprenant en outre des moyens de contrôle de saut, aptes à modifier la configuration du robot successivement entre :
a) ladite position déployée, où le robot repose en équilibre stable sur les deux roues (14, A₁) et le patin de contact (36, A₂) ;
b) ladite position resserrée, où le robot repose en équilibre stable sur les deux roues (14, A₁) et le point d'appui alternatif (A₃) à l'extrémité distale de la béquille de queue (50), cette béquille de queue n'étant pas sous contrainte de flexion ;
c) une position de préparation de saut, où, après sollicitation des premiers moyens moteurs dans le sens d'un basculement de l'affut vers l'arrière, le patin (36) vient en contact (A₄) avec le sol, la béquille de queue étant alors sous contrainte de flexion ; et
d) une position de saut, où le robot décolle du sol après libération des moyens de verrouillage.

4. Le robot de la revendication 3, dans lequel le point d'appui alternatif (A₃) est configuré par rapport à la béquille de queue (50) de manière que le passage de la position déployée à la position resserrée se fasse sans changement d'inclinaison de la direction principale (Δ) de l'affut par rapport au sol.

5. Le robot de la revendication 1, dans lequel le point de fixation (58) de la béquille de queue (50) au corps (22) du robot est situé, en direction radiale, au voisinage intérieur de la périphérie des roues (14).

6. Le robot de la revendication 1, dans lequel la longueur de la béquille de queue (50) est comprise entre 1 et 3 fois le diamètre des roues (14).

7. Le robot de la revendication 1, dans lequel la béquille de queue comprend une partie distale rigide allongée (52) reliée au corps du robot par un organe élastiquement déformable (54).

8. Le robot de la revendication 7, dans lequel la partie distale rigide (52) est une partie courbée tournant sa concavité vers le sol.

9. Le robot de la revendication 1, dans lequel la face de contact du patin (36) tournée vers le sol est une face arrondie convexe.

10. Le robot de la revendication 1, dans lequel l'extrémité distale (56) de la béquille de queue comprend en outre des moyens de montage d'un accessoire procurant une fonctionnalité supplémentaire au robot.

11. Le robot de la revendication 7, dans lequel la béquille de queue (50) est une béquille dont la partie rigide (52) est amovible et remplaçable par un accessoire procurant une fonctionnalité supplémentaire au robot.
